# EUROPEAN PATENT APPLICATION

(11) **EP 4 579 778 A1**
(43) Date of publication of application: **02.07.2025**
(21) Application number: 22962959.7
(22) Date of filing: 24.10.2022
(51) Int. Cl.: H01M 4/13, H01M 10/058

(54) **CYLINDRICAL BATTERY CELL AND CYLINDRICAL SECONDARY BATTERY**

(71) Applicant: Ningde Amperex Technology Limited, Ningde, Fujian 352100 (CN)
(72) Inventor: QIU, Shenzhao, Ningde, Fujian 352100 (CN); DONG, Yulong, Ningde City Fujian Province 352100 (CN)
(74) Representative: Icosa
(86) International application number: PCT/CN2022/127021
(87) International publication number: WO 2024/086971

(57) **Abstract**

This application discloses a cylindrical cell and a cylindrical secondary battery, where the cylindrical cell includes a first electrode plate, a separator, and a second electrode plate. The first electrode plate includes a first current collector, the first current collector is provided with a first blank foil region along an axial direction of the cylindrical cell, and the first blank foil region has a first chamfer at a terminating end of a winding direction of the cylindrical cell; and/or the second electrode plate includes a second current collector, the second current collector is provided with a second blank foil region along an axial direction of the cylindrical cell, and the second blank foil region has a second chamfer at a terminating end of a winding direction of the cylindrical cell. In this application, lengths of a first distance and a second distance of the first chamfer and/or the second chamfer are controlled to be within appropriate ranges. This can avoid that a sharp corner at a terminating position after flattening is too large and thereby prevents the sharp corner from piercing through the insulating adhesive paper to cause short circuit with a housing, thereby helping improve the safety performance of the battery.

## Description

### TECHNICAL FIELD

This application relates to the field of battery technologies, and in particular to a cylindrical cell and a cylindrical secondary battery.

### BACKGROUND

To address severe issues such as global energy crisis, environmental pollution, climate change, and low-carbon economy requirements, lithium batteries have been developed rapidly. Especially in the fields of transportation tools such as electric vehicles, electric bicycles, and electric tools, and energy storage, the applications of lithium batteries have become an inevitable trend. To improve the power performance of batteries, the current conventional cylindrical traction batteries generally use a full tab rolled structure. The full tab flattening method uses a flattening wheel to rotate and contract the tab foil material toward the center, so that the tab foil material is completely pressed toward the center to reduce the internal resistance of the battery and improve the high-rate charge and discharge performance of the battery. However, with the increase in battery capacity, under certain size constraints, the internal space of the battery is correspondingly reduced. During the flattening process of the battery, sharp corners are prone to form on the electrode plate, which can pierce through the insulating adhesive paper and cause short circuit with the housing, significantly increasing the safety risk.

### SUMMARY

This application provides a cylindrical cell and a cylindrical secondary battery to solve the problem of generation of sharp corners on the electrode plate that are capable of piercing through the insulating adhesive paper and then causing short circuit with the housing and significantly increasing the safety risk during the flattening process of the battery.

According to a first aspect, embodiments of this application provide a cylindrical cell, where the cylindrical cell includes a first electrode plate, a separator, and a second electrode plate; where the first electrode plate, the separator, and the second electrode plate are sequentially stacked and wound to form the cylindrical cell; where the first electrode plate includes a first current collector, the first current collector is provided with a first blank foil region along an axial direction of the cylindrical cell, the first blank foil region has a first chamfer at a terminating end along a winding direction of the cylindrical cell, and the first electrode plate further includes a first coating, where the first coating is provided on at least one surface of the first current collector, and the first current collector is provided with the first blank foil region at an end of the surface provided with the first coating; and/or the second electrode plate includes a second current collector, the second current collector is provided with a second blank foil region along an axial direction of the cylindrical cell, the second blank foil region has a second chamfer at a terminating end along a winding direction of the cylindrical cell, and the second electrode plate further includes a second coating, where the second coating is provided on at least one surface of the second current collector, and the second current collector is provided with the second blank foil region at an end of the surface provided with the second coating. With the first chamfer and/or the second chamfer respectively provided at the end of the first blank foil region and/or the second blank foil region along the winding direction of the cylindrical cell, it can prevent the generation of the sharp corners on the electrode that are capable of piercing through the insulating adhesive paper and then causing short circuit with the housing during the flattening process of the battery, thus improving the safety performance of the battery.

The first chamfer and/or the second chamfer include a beveled chamfer and a rounded chamfer. That is to say, chamfer beveling and/or rounding is performed at ends of the first electrode plate and/or the second electrode plate can prevent the sharp corners on the electrode plate from piercing the insulating adhesive paper during the flattening process of the battery.

In some embodiments, the first chamfer has a length a along a first direction, the first chamfer has a length b along a second direction, and the first blank foil region has a length c along the second direction, satisfying 0.3c ≤ a ≤2c and 0.3c ≤ b ≤c, where the first direction is a length direction of the first current collector, and the second direction is the width direction of the first current collector.

In some embodiments, it satisfies 0.6c ≤ a ≤ 1.6c and 0.5c ≤ b ≤ 0.8c.

In some embodiments, the second chamfer has a length a' along a first direction, the second chamfer has a length b' along a second direction, and the second blank foil region has a length c' along the second direction, satisfying 0.3c' ≤ a' ≤ 2c' and 0.3c' ≤ b' ≤ c'; where the first direction is a length direction of the second current collector; and the second direction is a width direction of the second current collector.

In some embodiments, it satisfies 0.6c' ≤ a' ≤ 1.6c' and 0.5c' ≤ b' ≤ 0.8c'.

With the length a of the first chamfer along the first direction controlled to satisfy 0.3c ≤ a ≤ 2c, the length b of the first chamfer along the second direction controlled to satisfy 0.3c ≤ b ≤ c, and/or the length a' of the second chamfer along the first direction controlled to satisfy 0.3c' ≤ a' ≤ 2c', and the length b' of the second chamfer along the second direction is controlled to satisfy 0.3c' ≤ b' ≤ c', it can prevent accumulation of excess blank foil material after flattening and avoid generation of sharp corners capable of piercing the insulating adhesive paper (in this case, the height H of the sharp corners is ≥ 25 µm), which is conducive to the improvement of the safety of the battery. With the length a of the first chamfer along the first direction controlled to satisfy 0.6c ≤ a ≤ 1.6c, and the length b of the first chamfer along the second direction controlled to satisfy 0.5c ≤ b ≤ 0.8c; and/or with the length a' of the second chamfer along the first direction controlled to satisfy 0.6c' ≤ a' ≤ 1.6c' and the length b' of the second chamfer along the second direction controlled to satisfy 0.5c' ≤ b' ≤ 0.8c', the height of the sharp corners can be controlled within 15 µm, further improving the safety performance of the battery.

In some embodiments, an insulating adhesive paper is provided around the periphery of a flattened surface formed by flattening the first blank foil region and/or the second blank foil region, and an overlapping region is present at a surrounding joint of the insulating adhesive paper.

In some embodiments, the overlapping region has a length of 1 mm to 10 mm along the winding direction. With the length of the overlapping region along the winding direction controlled to be not less than 1 mm, it can prevent aluminum leakage. When the length of the overlapping region along the winding direction is too short, there is a risk of short circuit. Moreover, the length of the overlapping region along the winding direction should not be too long and is controlled to be within 10 mm to improve the overall performance of the battery.

In some embodiments, is not overlap with a terminating position of the electrode plate and/or the separator. Overlapping of the overlapping region with the terminating position of the electrode plate and/or the separator results in an increase in the diameter of the battery, thereby affecting the energy density of the battery.

In some embodiments, an ending adhesive paper is provided around the periphery of a middle portion of the cylindrical cell, and an end of the insulating adhesive paper closer to the ending adhesive paper along the axial direction does not overlap with the ending adhesive paper. This avoids an increase in thickness caused by overlapping and thereby avoids an increase in the diameter of the battery. Moreover, when the overlapping region becomes thicker, the cell is also locally squeezed under force after swelling, leading to lithium precipitation and other performance problems of the cell.

In some embodiments, when viewed from a battery height direction, a projection of the insulating adhesive paper and a projection of the flattened surface overlap by a length of 2 mm to 10 mm along the axial direction. This is beneficial to improve the overall performance of the battery.

In some embodiments, the cylindrical cell further includes a current collector disc; where the flattened surface formed by flattening the first blank foil region and/or the second blank foil region is electrically connected to the current collector disc.

The current collector disc includes a positive electrode current collector disc and a negative electrode current collector disc. The first electrode plate may be a positive electrode plate or a negative electrode plate. If the first electrode plate is a positive electrode plate, then the second electrode plate is a negative electrode plate, a first flattened surface formed by flattening the first blank foil region of the first electrode plate is electrically connected to the positive electrode current collector disc, and a second flattened surface formed by flattening the second blank foil region of the second electrode plate is electrically connected to the negative electrode current collector disc. If the first electrode plate is a negative electrode plate, then the second electrode plate is a positive electrode plate, a first flattened surface formed by flattening the first blank foil region of the first electrode plate is electrically connected to the negative electrode current collector disc, and a second flattened surface formed by flattening the second blank foil region of the second electrode plate is electrically connected to the positive electrode current collector disc.

According to a second aspect, this application provides a cylindrical secondary battery including the cylindrical cell described in any one of the foregoing.

The beneficial effects brought by the technical solutions provided in some embodiments of this application include at least the following. This application provides a cylindrical cell, where the cylindrical cell includes a first electrode plate and a second electrode plate, where the first electrode plate is provided with a first blank foil region, the first blank foil region having a first chamfer at a terminating end, and the second electrode plate is provided with a second blank foil region, the second blank foil region having a second chamfer at a terminating end. Lengths of a first distance and a second distance of the first chamfer and/or the second chamfer are controlled to be within appropriate ranges, to prevent sharp corners at a terminating position after flattening from being too large and piercing through the insulating adhesive paper and thus causing short circuit with the housing. This improves the safety performance of the battery. In addition, the position and length of an overlapping region of the insulating adhesive paper, the position of the ending adhesive paper, and the overlapping length between a projection of the insulating adhesive paper and a projection of the flattened surface along the axial direction are controlled to be within appropriate ranges to improve the overall performance of the battery.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show only some embodiments of this application, and persons of skill in the art may derive other drawings from these accompanying drawings without creative efforts.
FIG. 1 is a schematic structural diagram of a cylindrical cell according to an embodiment of this application;
FIG. 2 is a schematic structural diagram of an electrode plate state according to an embodiment of this application;
FIG. 3 is a schematic structural diagram of an electrode plate state according to another embodiment of this application;
FIG. 4 is a schematic diagram of a position of an insulating adhesive paper after a cylindrical cell is flattened according to an embodiment of this application;
FIG. 5 is a schematic diagram of an overlapping region of an insulating adhesive paper according to an embodiment of this application; and
FIG. 6 is an illustration of a sharp corner generated at a terminating position after flattening in a comparative example 3 according to this application.

In which:
1. cylindrical cell; 11. first electrode plate; 101. first current collector; 102. first blank foil region; 103. first chamfer; 12. separator; 13. second electrode plate; 101'. second current collector; 102'. second blank foil region; 103'. second chamfer; 14. flattened surface; 15. insulating adhesive paper; 150. overlapping region; and 16. ending adhesive paper.

### DESCRIPTION OF EMBODIMENTS

To make the objectives, technical solutions, and advantages of this application more comprehensible, the following describes this application in detail with reference to embodiments and accompanying drawings. It should be understood that the specific embodiments described herein are merely used to explain this application but are not intended to limit this application.

Currently, cylindrical cells generally feature an electrode plate structure with no chamfer, that is, a bare cell with a terminating position cut straight and both ends adopting a full tab structure with a positive/negative electrode tab. Blank foil regions at both ends of the bare cell are flattened using a flattening device to form flattened surfaces, where the flattened surfaces serve as welding positions. The flattened surfaces of the positive/negative electrodes of the bare cell are then encapsulated, and the flattened positive/negative electrode welding positions are laser-welded to the positive/negative electrode current collector discs of the cylindrical cell, respectively. Then, the bare cell is put into a housing, and the positive/negative electrode current collector discs are welded to the cover plate after transfer welding. Finally, the cover plate is sealed with the housing through end-cap laser welding or clamping.

In the prior art, the electrode plate is straight cut at a terminating end of the structure, that is, the terminating end of the electrode plate has no special chamfer. In this case, during the flattening process of the battery, obvious sharp corners are prone to form on a blank foil at the terminating position after flattening, which can pierce through the insulating adhesive paper to come into contact with the housing and thus cause a risk of short circuit. Generally, insulating adhesive paper with a thickness of 25-30 µm is used. A too-large thickness of the insulating adhesive paper may result in a loss of energy density of the cylindrical cell. A height H of the sharp corners refers to a distance that the flattened region at a terminating position after flattening exceeds the cylindrical body of the bare cell. When H ≥ 25 µm, it can be considered that the sharp corners can have a risk of piercing through the insulating adhesive paper to come into contact with the housing and thus causing short circuit.

To solve the above technical problem, this application proposes a secondary battery as well as an electronic device.

### Cylindrical cell

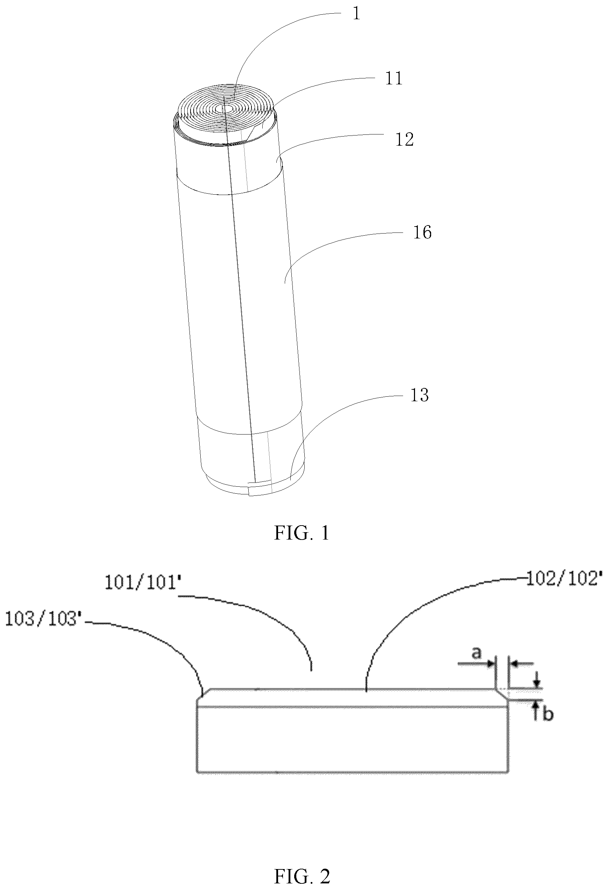

Referring to FIG. 1, a cylindrical cell 1 in this application includes a first electrode plate 11, a separator 12, and a second electrode plate 13. where the first electrode plate 11, the separator 12, and the second electrode plate 13 are sequentially stacked and wound to form the cylindrical cell 1; where the first electrode plate 11 includes a first current collector 101, the first current collector 101 is provided with a first blank foil region 102 along an axial direction of the cylindrical cell 1, and the first blank foil region 102 has a first chamfer 103 at a terminating end along a winding direction of the cylindrical cell 1; and/or
the second electrode plate 13 includes a second current collector 101', the second current collector 101' is provided with a second blank foil region 102' along an axial direction of the cylindrical cell 1, and the second blank foil region 102' has a second chamfer 103' at a terminating end along a winding direction of the cylindrical cell 1. With the first chamfer 103 and/or the second chamfer 103' cut out at the terminating end of the first blank foil region 102 and/or the second blank foil region 102' along the winding direction of the cylindrical cell 1 respectively, that is, some blank foil corners are removed, the remaining blank foil region does not produce sharp corners capable of piercing through the insulating adhesive paper after flattening. This can avoid the problem in the prior art that a large sharp corner is produced on the electrode plate in the flattening process of the battery and pierces through the insulating adhesive paper to cause short circuit with the housing, thus improving the safety performance of the battery.

In this patent, the first chamfer has a length a along a first direction, which is denoted as a first distance a, the first chamfer has a length b along a second direction, which is denoted as a second distance b, and the first blank foil region has a length c along the second direction, which is denoted as a width c of the first blank foil region.

The first direction is a length direction of the first current collector; and the second direction is a width direction of the first current collector.

In some embodiments of this application, the first blank foil region 102 is provided with the first chamfer 103 at a starting end along the winding direction of the cylindrical cell 1; and/or
the second blank foil region 102' is provided with the second chamfer 103' at a starting end along the winding direction of the cylindrical cell 1;
where the starting end of the first blank foil region 102 and/or the second blank foil region 102' along the winding direction of the cylindrical cell 1 is opposite the terminating end. With a chamfer also set at the starting end of the blank foil region on the electrode plate along the winding direction of the cylindrical cell, it facilitates the manufacturing of the cell.

The first distance of first chamfer 103 is a, the second distance of the first chamfer 103 is b, and the width of the first blank foil region 102 is c, satisfying 0.3c ≤ a ≤ 2c, and 0.3c ≤ b ≤ c.

For example, the first distance a is 0.3c, 0.6c, 0.8c, 1c, 1.2c, 1.4c, 1.6c, 1.8c, 2c, or within a range defined by any two of these values.

For example, the second distance b is 0.3c, 0.5c, 0.6c, 0.8c, 1c, or within a range defined by any two of these values.

Further, it is satisfied that 0.6c ≤ a ≤ 1.6c and 0.5c ≤ b ≤ 0.8c.

For example, the first distance a is 0.6c, 0.7c, 0.8c, 0.9c, 1c, 1.1c, 1.2c, 1.3c, 1.4c, 1.5c, 1.6c, or within a range defined by any two of these values.

For example, the second distance b is 0.5c, 0.6c, 0.7c, 0.8c, or within a range defined by any two of these values.

In this patent, the second chamfer has a length a' along the first direction, which is denoted as a first distance a'; the second chamfer has a length b' along the second direction, which is denoted as a second distance b'; and the second blank foil region has a length c' along the second direction, which is denoted as a width c' of the first blank foil region.

The first direction is a length direction of the second current collector, and the second direction is a width direction of the second current collector.

The first distance of the second chamfer 103' is a', the second distance of the second chamfer 103' is b', and the width of the second blank foil region 102' is c', satisfying 0.3c' ≤ a' ≤ 2c' and 0.3c' ≤ b' ≤ c'.

For example, the first distance a' is 0.3c', 0.6c', 0.8c', 1c', 1.2c', 1.4c', 1.6c', 1.8c', 2c', or within a range defined by any two of these values.

For example, the second distance b is 0.3 c', 0.5 c', 0.6 c', 0.8 c', 1c', or within a range defined by any two of these values.

Further, it is satisfied that 0.6c' ≤ a' ≤ 1.6c' and 0.5c' ≤ b' ≤ 0.8c'.

For example, the first distance a' is 0.6c', 0.7c', 0.8c', 0.9c', 1c', 1.1c', 1.2c', 1.3c', 1.4c', 1.5c', 1.6c', or within a range defined by any two of these values.

For example, the second distance b' is 0.5c', 0.6c', 0.7c', 0.8c', or within a range defined by any two of these values.

The first chamfer 103 and/or the second chamfer 103'includes at least one of a beveled chamfer and a rounded chamfer, and in some embodiments of this application, the first chamfer 103 and/or the second chamfer 103' is a beveled chamfer. Referring to FIG. 2, the first chamfer 103 and/or the second chamfer 103' in FIG. 2 is a beveled chamfer. That is, the first blank foil region 102 and/or the second blank foil region 102' is provided with a beveled edge at the terminating end along the winding direction of the cylindrical cell 1. The beveled edge has a first endpoint and a second endpoint, where the first endpoint is provided on a first edge of the first blank foil region 102 and/or the second blank foil region 102', the second endpoint is provided on a second edge of the first blank foil region 102 and/or the second blank foil region 102', and the first edge is perpendicular to the second edge. The first endpoint and the second endpoint respectively extend away from the first edge and the second edge and intersect at an intersection point, a distance between the first endpoint and the intersection point is the first distance (that is, the length a shown in FIG. 2), and a distance between the second endpoint and the intersection point is the second distance (that is, the length b shown in FIG. 2). A length direction of the first distance is a direction of the first endpoint extending toward the intersection point, a length direction of the second distance is a direction of the second endpoint extending toward the intersection point, and the length direction of the first distance is perpendicular to the length direction of the second distance.

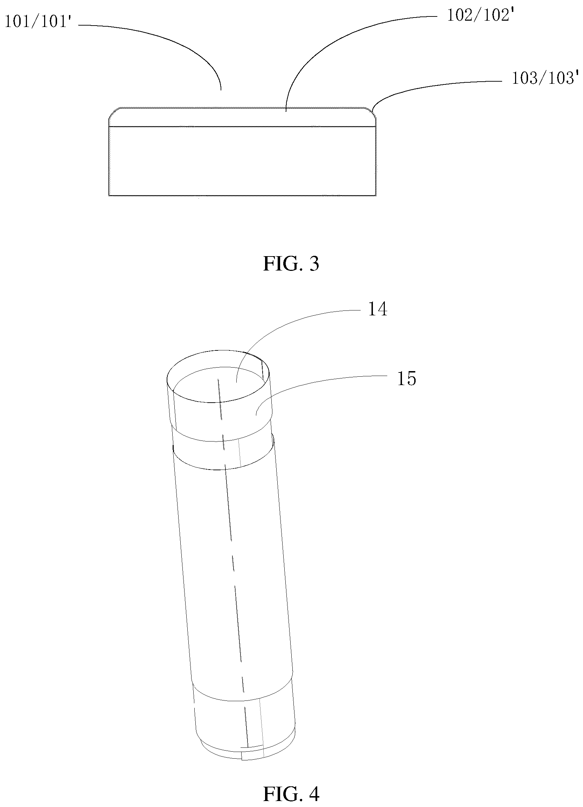

In some other embodiments of this application, the first chamfer 103 and/or the second chamfer 103' is a rounded chamfer. Referring to FIG. 3, the first chamfer 103 and/or the second chamfer 103' is a rounded chamfer. That is, the first blank foil region 102 and/or the second blank foil region 102' is provided with a rounded edge at the terminating end along the winding direction of the cylindrical cell 1, the rounded edge having a rounded corner radius of r, satisfying 0.3c < r < 2c.

For example, the rounded corner radius r of the rounded edge is 0.3c, 0.5c, 0.8c, 1c, 1.3c, 1.5c, 1.7c, 2c, or within a range defined by any two of these values.

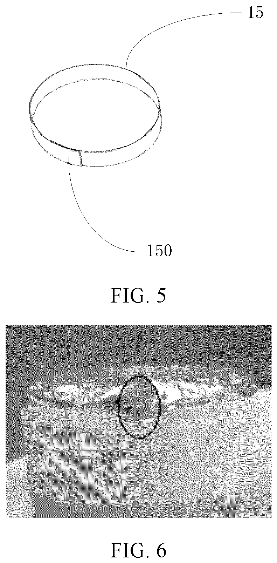

Referring to FIGs. 4 and 5, an insulating adhesive paper 15 is provided around the periphery of the flattened surface 14 formed by flattening the first blank foil region 102 and/or the second blank foil region 102', and an overlapping region 150 is present at a surrounding joint of the insulating adhesive paper 15; and the overlapping region 150 has a length of 1 mm to 10 mm along the winding direction. As shown in FIG. 5, the length of the overlapping region 150 along the winding direction is a transverse width of the overlapping region 150. With the length of the overlapping region along the winding direction controlled to be not less than 1 mm, it can prevent aluminum leakage. When the length of the overlapping region along the winding direction is too short, there is a risk of short circuit. Moreover, the length of the overlapping region along the winding direction should not be too long and is controlled to be within 10 mm to improve the overall performance of the battery.

For example, a length of the overlapping region 150 along the winding direction is 1 mm, 2 mm, 4 mm, 6 mm, 8 mm, 10 mm, or within a range defined by any two of these values.

As shown in FIG. 4, the overlapping region 150 avoids the terminating position of the electrode plate and/or the separator. Overlapping of the overlapping region 150 with the terminating position of the electrode plate and/or the separator results in an increase in the diameter of the battery, thereby affecting the energy density of the battery.

As shown in FIG. 1, an ending adhesive paper 16 is provided around the periphery of a middle portion of the cylindrical cell 1, and an end of the insulating adhesive paper 15 closer to the ending adhesive paper 16 along the axial direction does not overlap with the ending adhesive paper 16. This avoids an increase in thickness caused by overlapping and thereby avoids an increase in the diameter of the battery. Moreover, when the overlapping region 150 becomes thicker, the cell is also locally squeezed under force after swelling, leading to lithium precipitation and other performance problems of the cell.

A projection of the insulating adhesive paper 15 and a projection of the flattened surface 14 overlap by a length of 2 mm to 10 mm along the axial direction. With the length of overlapping along the axial direction between the projection of the insulating adhesive paper 15 and the projection of the flattened surface 14 controlled to be not less than 2 mm, a region where the flattened surface is situated is protected from aluminum leakage. Under a condition that the length of overlapping along the axial direction between the projection of the insulating adhesive paper 15 and the projection of the flattened surface 14 is too small (for example, less than 2 mm), the insulating adhesive paper cannot be affixed to the flattened surface, leading to possible folding and aluminum leakage. Under a condition that the length of overlapping along the axial direction between the projection of the insulating adhesive paper 15 and the projection of the flattened surface 14 is too large (for example, larger than 10 mm), the flattened surface is excessively covered by the insulating adhesive paper, and the excessive insulating adhesive paper may overlap with the current collector disc, reducing the welding area and thereby affecting welding.

For example, the length of overlapping along the axial direction between the projection of the insulating adhesive paper 15 and the projection of the flattened surface 14 is 2 mm, 4 mm, 5 mm, 6 mm, 8 mm, 10 mm, or within a range defined by any two of these values.

The cylindrical cell further includes a current collector disc (not shown in the figure), where the current collector disc includes at least one of a positive electrode current collector disc and a negative electrode current collector disc. The first electrode plate 11 may be a positive electrode plate or a negative electrode plate. Under a condition that the first electrode plate 11 is a positive electrode plate, the second electrode plate 13 is a negative electrode plate, and under a condition that the first electrode plate 11 is a negative electrode plate, the second electrode plate 13 is a positive electrode plate. That is, the first electrode plate 11 and the second electrode plate 13 are two electrode plates of opposite polarities.

In some embodiments of this application, the first electrode plate 11 is a positive electrode plate, the second electrode plate 13 is a negative electrode plate, a first flattened surface formed by flattening the first blank foil region 102 is electrically connected to the positive electrode current collector disc, and a second flattened surface formed by flattening the second blank foil region 102' is electrically connected to the negative electrode current collector disc, to obtain the cylindrical bare cell 1. Then, the cylindrical bare cell 1 is put into the housing. After that, the negative electrode current collector disc at one end of the cylindrical bare cell 1 is welded to the bottom of the housing for conduction, making the housing negatively charged, and the positive electrode current collector disc at the other end of the cylindrical bare cell 1 is welded to the cover cap, making the cover cap positively charged. Finally, the cover plate is sealed with the housing through end-cap laser welding or clamping, forming the cylindrical secondary battery.

In some other embodiments of this application, the first electrode plate 11 is a negative electrode plate, the second electrode plate 13 is a positive electrode plate, a first flattened surface formed by flattening the first blank foil region 102 is electrically connected to the negative electrode current collector disc, and a second flattened surface formed by flattening the second blank foil region 102' is electrically connected to the positive electrode current collector disc, to obtain the cylindrical cell 1. Then, the cylindrical cell 1 is put into the housing. After that, the negative electrode current collector disc at one end of the cylindrical cell 1 is welded to the bottom of the housing for conduction, making the housing negatively charged, and the positive electrode current collector disc at the other end of the cylindrical cell 1 is welded to the cover cap, making the cover cap positively charged. Finally, the cover plate is sealed with the housing through end-cap laser welding or clamping, forming the cylindrical secondary battery.

### Cylindrical secondary battery

The cylindrical secondary battery includes a housing and a cover cap assembly, where the cover cap assembly includes a cover cap and a cover plate. The housing accommodates a cylindrical cell 1 inside, where a current collector disc at one end of the cylindrical cell 1 is welded to the housing bottom (the bottom of the housing) for conduction, with the housing being negatively charged, and a current collector disc at the other end of the cylindrical cell 1 is welded to the cover cap, with the cover cap being positively charged. Finally, the cover plate is sealed with the housing through end-cap laser welding or clamping, forming the cylindrical secondary battery. The cylindrical cell 1 is formed by sequentially stacking and winding the first electrode plate 11, the separator 12, and the second electrode plate 13. Flattened surfaces 14 are provided at two ends of the cylindrical cell 1, respectively, where the flattened surfaces 14 include a first flattened surface and a second flattened surface, and the flattened surfaces 14 at the two ends are electrically connected to the current collector discs, respectively. The flattened surface 14 is formed by flattening a blank foil region of the first electrode plate 11 and/or the second electrode plate 13 at an end along an axial direction of the cylindrical cell 1 using a flattening device, where the first flattened surface is formed by flattening a blank foil region of the first electrode plate 11 at an end along the axial direction of the cylindrical cell 1 using a flattening device, and the second flattened surface is formed by flattening a blank foil region of the second electrode plate 13 at an end along the axial direction of the cylindrical cell 1 using a flattening device.

Further, the first electrode plate 11 includes a first current collector 101, where the first current collector 101 is provided with a first blank foil region 102 along the axial direction of the cylindrical cell 1, the first blank foil region 102 has a first chamfer 103 at a terminating end along a winding direction of the cylindrical cell 1, and a flattened surface formed by flattening the first blank foil region 102 is the first flattened surface; and/or
the second electrode plate 13 includes a second current collector 101', where the second current collector 101 is provided with a second blank foil region 102' along the axial direction of the cylindrical cell 1, the second blank foil region 102' has a second chamfer 103' at a terminating end along a winding direction of the cylindrical cell 1, and a flattened surface formed by flattening the second blank foil region 102' is the second flattened surface.

In some embodiments of this application, the first electrode plate 11 is a positive electrode plate, the second electrode plate 13 is a negative electrode plate, a first flattened surface formed by flattening the first blank foil region 102 is electrically connected to the positive electrode current collector disc, and a second flattened surface formed by flattening the second blank foil region 102' is electrically connected to the negative electrode current collector disc.

In some other embodiments of this application, the first electrode plate 11 is a negative electrode plate, the second electrode plate 13 is a positive electrode plate, a first flattened surface formed by flattening the first blank foil region 102 is electrically connected to the negative electrode current collector disc, and a second flattened surface formed by flattening the second blank foil region 102' is electrically connected to the positive electrode current collector disc.

In some embodiments of this application, an insulating adhesive paper 15 is provided around the periphery of the first flattened surface and/or the second flattened surface, an overlapping region 150 is present at a surrounding joint of the insulating adhesive paper 15, and an end of the insulating adhesive paper 15 exceeds the first flattened surface and/or the second flattened surface by 1 mm to 5 mm to avoid short circuit of the electrode plate with the housing.

### Electronic device

The electronic device includes any one of the cylindrical secondary batteries above in this application. The electronic device in this application may be used without limitation in a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

The following describes the embodiments of this application more specifically by using examples and comparative examples.

### Example 1

### Manufacturing of cylindrical cell

A positive electrode plate (a first electrode plate 11), a separator 12, and a negative electrode plate (a second electrode plate 13) were sequentially stacked and wound to form a cylindrical cell 1. The positive electrode plate was provided with a first blank foil region 102, the first blank foil region 102 had a first chamfer 103, the negative electrode plate was provided with a second blank foil region 102', and the second blank foil region 102' had a second chamfer 103'. Width parameters of the blank foil regions as well as parameters of the first chamfer 103 and the second chamfer 103' are shown in Table 1, where the width of the blank foil region in Table 1 is the width of the first blank foil region 102 and the second blank foil region 102'.

A first flattened surface formed by flattening the first blank foil region 102 was electrically connected to the positive electrode current collector disc, and a second flattened surface formed by flattening the second blank foil region 102' was electrically connected to the negative electrode current collector disc.

An insulating adhesive paper 15 was provided around the periphery of both the first flattened surface and the second flattened surface, the insulating adhesive paper 15 had a transverse width of 5 mm in an overlapping region at the surrounding joint, and an end of the insulating adhesive paper 15 exceeded both the flattened surfaces by a height of 3 mm. Thickness parameters of the insulating adhesive paper 15 are shown in Table 1. The insulating adhesive paper 15 is a common commercially available insulating adhesive paper.

### Manufacturing of cylindrical secondary battery

The cylindrical cell manufactured above was placed inside the housing. After that, the negative electrode current collector disc at one end of the cylindrical cell 1 was welded to the bottom of the housing for conduction, and electrolyte was injected. Then, the positive electrode current collector disc at the other end of the cylindrical cell 1 was welded to a cover cap, with the cover cap being positively charged. Finally, the cover plate was sealed with the housing through end-cap laser welding or clamping, forming the cylindrical secondary battery.

It should be noted that the positive electrode plate, the negative electrode plate, the separator, and the electrolyte are all prepared by conventional methods of the prior art.

### Examples 2 to 10

Examples 2 to 10 include most of the operation steps in example 1 and differ from example 1 in that some parameters in the manufacturing process of the cylindrical cell are adjusted within a specified range. For details, refer to Table 1.

### Comparative examples 1 to 3

The comparative examples 1 to 3 include most of the operation steps in example 1, and differ from example 1 in that some parameters in the manufacturing process of the cylindrical cell are adjusted within a specified range. For details, refer to Table 1.

Sharp corner testing: The height of a sharp corner is obtained by subtracting a radius of the cylindrical cell from a distance between a position of the sharp corner and a center of a circle along a direction perpendicular to the axial direction.

**Table 1**

| Group | Thickness of insulating adhesive paper | Width of blank foil region | First chamfer and/or second chamfer | | Sharp corner/µm |
|---|---|---|---|---|---|
| | | | a and/or a' | b and/or b' | |
| Example 1 | 25 µm | 5.4 mm | 1.62 mm (0.3c) | 3.24 mm (0.6c) | 18 |
| Example 2 | 25 µm | 5.4 mm | 2.7 mm (0.5c) | 3.24 mm (0.6c) | 16 |
| Example 3 | 25 µm | 5.4 mm | 4.32 mm (0.8c) | 3.24 mm (0.6c) | 12 |
| Example 4 | 25 µm | 5.4 mm | 6.48 mm (1.2c) | 3.24 mm (0.6c) | 7 |
| Example 5 | 25 µm | 5.4 mm | 8.64 mm (1.6c) | 3.24 mm (0.6c) | 11 |
| Example 6 | 25 µm | 5.4 mm | 10.8 mm (2c) | 3.24 mm (0.6c) | 15 |
| Example 7 | 25 µm | 5.4 mm | 6.48 mm (1.2c) | 1.62 mm (0.3c) | 22 |
| Example 8 | 25 µm | 5.4 mm | 6.48 mm (1.2c) | 2.7 mm (0.5c) | 14 |
| Example 9 | 25 µm | 5.4 mm | 6.48 mm (1.2c) | 4.32 mm (0.8c) | 15 |
| Example 10 | 25 µm | 5.4 mm | 6.48 mm (1.2c) | 5.4 mm (c) | 24 |
| Comparative example 1 | 25 µm | 5.4 mm | 0.54 mm (0.1c) | 3.24 mm (0.6c) | 30 |
| Comparative example 2 | 25 µm | 5.4 mm | 11.88 mm (3c) | 3.24 mm (0.6c) | 27 |
| Comparative example 3 | 25 µm | 5.4 mm | 6.48 mm (1.2c) | 0.54 (0.1c) | 33 |

As compared with the comparative examples 1 to 3, in examples 1 to 10, the first distance a/a' and the second distance b/b' of the first chamfer and/or the second chamfer are controlled to be within appropriate ranges, so as to effectively avoid that the flattened region at a terminating position after flattening exceeds the cylinder of the bare cell by a distance of greater than 25 µm, that is, in the flattening process, effectively preventing generation of sharp corners capable of piercing through the insulating adhesive paper, thereby improving the safety of the battery. In examples 3 to 5 and examples 8 and 9, ranges of the first distance a/a' and the second distance b/b' of the first chamfer and/or the second chamfer are further adjusted. In a case of satisfying 0.6c ≤ a ≤ 1.6c and 0.5c ≤ b ≤ 0.8c, and/or 0.6c' ≤ a' ≤ 1.6c' and 0.5c' ≤ b' ≤ 0.8c', the height of the sharp corners generated during flattening can be controlled, that is, a distance by which the flattened region at a terminating position after flattening exceeds the cylinder of the bare cell is controlled to be within 15 µm. This is to further avoid, in the flattening process, generation of sharp corners capable of piercing through the insulating adhesive paper. In particular, under a condition that the first distance a/a' of the first chamfer and/or the second chamfer is controlled to be 1.2c, and the second distance b/b' of the first chamfer and/or the second chamfer is controlled to be 0.6c (for example, in example 4), the height H of sharp corners at a flattened terminating position is only 7 µm. Under a condition that the first distance a/a' of the first chamfer and/or the second chamfer is controlled to be 1.2c, and the second distance b/b' of the first chamfer and/or the second chamfer is controlled to be 1c (for example, in example 10), the height H of sharp corners at the flattened terminating position is maximized but still only 24 µm. In the comparative examples 1 and 2, the first distance a/a' of the first chamfer and/or the second chamfer is not within an appropriate range. In this case, the height H of sharp corners at the flattened terminating position can be as high as about 30 µm, meaning that sharp corners piercing through the insulating adhesive paper may be generated during the flattening process of the battery in comparative examples 1 and 2. In comparative example 3, the second distance b/b' of the first chamfer and/or the second chamfer is not within an appropriate range. In this case, the height H of sharp corners at the flattened terminating position is as high as 33 µm, meaning that sharp corners piercing through the insulating adhesive paper may be generated during the flattening process of the battery in comparative example 3, (as shown in FIG. 6, a circled region in FIG. 6 represents a sharp corner), thereby significantly increasing the safety risk of the battery. In addition, in the embodiments of this application, the position and length of the overlapping region of the insulating adhesive paper, as well as the position of the ending adhesive paper and the distance by which the ending adhesive paper exceeds the flattened surface are controlled to be within appropriate ranges, to further improve the overall performance of the battery.

The same or similar symbols in the accompanying drawings of this embodiment correspond to the same or similar components. In the descriptions of this application, it can be understood that terms such as "up", "down", "left", "right", and the like indicating orientation or positional relationships are based on orientation or positional relationships shown in the accompanying drawings. Such terms are intended merely for the ease and brevity of description of this application without indicating or implying that the apparatuses or components mentioned in this application must have specified orientations or must be constructed and operated in the specified orientations. Therefore, the terms used in the accompanying drawings to describe the positional relationships are for exemplary purposes only, and should not be understood as a limitation of this patent. Ordinary skilled in the art can understand specific meanings of the above terms based on specific circumstances.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. A cylindrical cell, comprising a first electrode plate, a separator, and a second electrode plate; wherein
the first electrode plate, the separator, and the second electrode plate are sequentially stacked and wound to form the cylindrical cell; wherein
the first electrode plate comprises a first current collector, the first current collector is provided with a first blank foil region along an axial direction of the cylindrical cell, and the first blank foil region has a first chamfer at a terminating end along a winding direction of the cylindrical cell; and/or
the second electrode plate comprises a second current collector, the second current collector is provided with a second blank foil region along an axial direction of the cylindrical cell, and the second blank foil region has a second chamfer at a terminating end along a winding direction of the cylindrical cell.

2. The cylindrical cell according to claim 1, wherein the first chamfer has a length a along a first direction, the first chamfer has a length b along a second direction, and the first blank foil region has a length c along the second direction, satisfying 0.3c ≤ a ≤ 2c and 0.3c ≤ b ≤ c; wherein
the first direction is a length direction of the first current collector; and
the second direction is a width direction of the first current collector.

3. The cylindrical cell according to claim 1, wherein the second chamfer has a length a' along a first direction, the second chamfer has a length b' along a second direction, and the second blank foil region has a length c' along the second direction, satisfying 0.3c' ≤ a' ≤ 2c' and 0.3c' ≤ b' ≤ c'; wherein
the first direction is a length direction of the second current collector; and
the second direction is a width direction of the second current collector.

4. The cylindrical cell according to claim 2, wherein 0.6c ≤ a ≤ 1.6c and 0.5c ≤ b ≤ 0.8c.

5. The cylindrical cell according to claim 3, wherein 0.6c' ≤ a' ≤ 1.6c' and 0.5c' ≤ b' ≤ 0.8c'.

6. The cylindrical cell according to claim 1, wherein an insulating adhesive paper is provided around the periphery of a flattened surface formed by flattening the first blank foil region and/or the second blank foil region, and an overlapping region is present at a surrounding joint of the insulating adhesive paper.

7. The cylindrical cell according to claim 6, wherein the overlapping region has a length of 1 mm to 10 mm along the winding direction.

8. The cylindrical cell according to claim 6, wherein is not overlap with a terminating position of the electrode plate and/or the separator.

9. The cylindrical cell according to claim 6, wherein an ending adhesive paper is provided around the periphery of a middle portion of the cylindrical cell, and an end of the insulating adhesive paper closer to the ending adhesive paper along the axial direction does not overlap with the ending adhesive paper.

10. The cylindrical cell according to claim 9, wherein when viewed from a battery height direction, a projection of the insulating adhesive paper and a projection of the flattened surface overlap by a length of 2 mm to 10 mm along the axial direction.

11. The cylindrical cell according to claim 6, wherein the cylindrical cell further comprises a current collector disc; wherein
the flattened surface formed by flattening the first blank foil region and/or the second blank foil region is electrically connected to the current collector disc.

12. A cylindrical secondary battery, wherein the cylindrical secondary battery comprises the cylindrical cell according to any one of claims 1 to 11.
